# EUROPÄISCHE PATENTSCHRIFT

(11) **EP 0 750 021 B1**
(45) Veröffentlichungstag und Bekanntmachung des Hinweises auf die Patenterteilung: **11.04.2001**
(21) Anmeldenummer: 96109257.4
(22) Anmeldetag: 10.06.1996
(51) Int. Cl.: C09C 1/00, C08K 9/02, C09D 7/12, C09D 11/00, A61K 7/00

(54) **Goldfarbiges Pigment auf Basis von mit Metalloxiden überzogenen Substraten**
Pigment of golden colour based on substrates coated with metal oxides
Pigments de couleur d'or à base de substrats revêtus d'oxydes métalliques

(30) Priorität: 23.06.1995 DE 19522864
(43) Veröffentlichungstag der Anmeldung: 27.12.1996
(73) Patentinhaber: MERCK PATENT GmbH, 64293 Darmstadt (DE)
(72) Erfinder: Vogt, Reiner, Dr., 64289 Darmstadt (DE); Bernhard, Klaus, 64823 Gross-Umstadt (DE); Pfaff, Gerhard, Dr., 64839 Münster (DE)

(56) Entgegenhaltungen:
- EP-A- 0 499 864
- EP-A- 0 525 526
- EP-A- 0 571 836
- EP-A- 0 675 175
- WO-A-93/12182
- DE-A- 4 140 296
- DE-A- 4 241 753
- FR-A- 1 326 900
- R. MAISCH: "New effect pigments from grey to black" XP002029444 18th International Conference in Organic Coatings Science and Technology, 6-10 July 1992, pages 297-315, Athens, GR * Seite 300, Absatz 3 *

## Beschreibung

Die vorliegende Erfindung betrifft Goldpigmente mit hohem Deckvermögen sowie deren Herstellungsverfahren und Verwendung.

Perlglanzpigmente auf Basis von Glimmerplättchen, deren Goldton durch Zusatz von Eisenoxiden verstärkt ist, sind bereits mehrfach in der Literatur beschrieben worden und werden auch seit vielen Jahren mit Erfolg angewendet. Dabei werden sowohl Pigmente beschrieben, bei denen Eisenoxid zusammen mit einem anderen Metalloxid, insbesondere Titandioxid, auf die Glimmerplättchen aufgefällt wird, als auch Pigmente, bei denen die Fällungen nacheinander erfolgen.

So wurden in der DE-PS 14 67 488, CS 21 12 30, CS 223608 Perlglanzpigmente beschrieben, wobei auf mit Titandioxid beschichtete Glimmerplättchen eine zusätzliche Eisenoxidschicht aufgebracht wurde.

Aus dem US-Patent 3,087,826 ist bekannt, daß durch Abscheiden einer Fe₂O₃-Schicht auf eine TiO₂-Schicht goldfarbene Pigmente erhalten werden, die beim Glühen einen rötlichen Farbton annehmen. In der DE-PS 19 59 998 werden Pigmente beansprucht, die auf Glimmer zunächst eine Deckschicht von Titan- und Eisenoxid und darauf eine Deckschicht aus Titan- und/oder Zirkoniumdioxid besitzen.

In der DE-PS 22 44 298 wird ein Verfahren zur Herstellung von gold-farbenen Perlglanzpigmenten beschrieben, bei dem ein mit TiO₂ und/oder ZrO₂ beschichtetes Glimmerpigment zunächst mit Eisen(II)hydroxid beschichtet wird, das dann zu Fe₂O₃ oxidiert wird.

Aus der DE-PS 27 23 871 sind Glimmerpigmente bekannt, die auf einer sehr dünnen TiO₂- oder Al₂O₃-Schicht eine dicke Fe₂O₃-Schicht tragen.

Plättchenförmige Substrate, die mit einer Metalloxidschicht aus Titan und Eisen belegt sind, werden in der EP 0 211 351 B1 beschrieben.

Die aus dem Stand der Technik bekannten Goldpigmente haben den Nachteil, daß sie beim Abkippen auf flache Winkel einen Braunstich aufweisen.

Es bestand daher ein Bedürfnis zur Herstellung von Goldpigmenten mit hohem Glanz und Deckvermögen und ohne das Erfordernis eines großen technischen Aufwandes, die oben genannte Nachteile nicht aufweisen.

Es ist bekannt, daß durch Einarbeiten von Kohlenstoff in Pigmente besondere Farbeffekte erzielt werden können. So werden in der DE 41 41 069 Glanzpigmente auf Basis plättchenförmiger silikatischer Substrate beschrieben, die mit einer ersten Schicht aus einem hochbrechenden Metalloxid, einer zweiten schwarzen Schicht im wesentlichen bestehend aus Kohlenstoff oder Metall und einer dritten hochbrechenden Metalloxidschicht beschichtet sind.

Überraschenderweise wurde nun gefunden, daß man Goldpigmente mit besonderen Farbeffekten erhält, wenn man Substrate zunächst mit einer mit Kohlenstoff dotierten Titandioxidschicht und anschließend mit einer Schicht aus Eisenoxid belegt.

Gegenstand der Erfindung sind somit Goldpigmente auf Basis von mit Metalloxiden überzogenen Substraten, dadurch gekennzeichnet, daß das Pigment einen Mehrschichtenaufbau besitzt, wobei auf eine erste Schicht von Titandioxid, die mit Kohlenstoff, der durch thermische Zersetzung von organischen kolloidalen Partikeln erhalten wird, dotiert ist, eine Eisen(lll)oxidschicht folgt.

Gegenstand der Erfindung ist auch ein Verfahren zur Herstellung der Goldpigmente nach Anspruch 1, dadurch gekennzeichnet, daß man eine wäßrige Substratfösung henstellt, gegebenenfalls eine hydrolysierbare Metallsalzlösung und gleichzeitig aber separat eine Titansalzlösung und eine wäßrige organische Kolloidlösung zugibt, wobei der pH-Wert der Substratsuspension durch gleichzeitige Zugabe einer Base oder eine Säure in einem Bereich gehalten wird, der die Metallsalzhydrolyse bewirkt, das fertige Substrat abtrennt, wäscht, trocknet und bei Temperaturen von > 700 °C unter Sauerstoffausschluß glüht und nach dem Glühen auf das so beschichtete Substrat in wäßriger Lösung eine Eisenoxid- bzw. hydroxidschicht auffällt, das fertige Pigment abtrennt, wäscht, trocknet und gegebenenfalls glüht.

Geeignete Basissubstrate für die Beschichtung sind einerseits opake und andererseits transparente nicht-plättchenförmige Substrate. Bevorzugte Substrate sind Schichtsilikate sowie mit Metalloxiden beschichtete plättchenförmige Materialien. Insbesondere geeignet sind Glimmer,-Talkum, Kaolin, Wismutoxichlorid, Glas-, BaSO₄-, SiO₂- oder synthetische Keramikflakes, oder andere vergleichbare Materialien. Daneben kommen auch Metallplättchen, wie z.B. Aluminiumplättchen oder plättchenförmige Metalloxide, wie z.B. plättchenförmiges Eisenoxid und Glimmerbeschichtungen mit farbigen oder farblosen Metalloxiden, allein oder in Mischung in einer einheitlichen Schicht oder in aufeinanderfolgenden Schichten in Frage. Diese als Perlglanzpigmente bekannten Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt.

Die plättchenförmigen Substrate haben in der Regel eine Dicke zwischen 0,1 und 5 µm und insbesondere zwischen 0,2 und 4,5 µm. Die Ausdehnung in den beiden anderen Dimensionen beträgt üblicherweise zwischen 1 und 250 µm, insbesondere zwischen 2 und 200 µm.

Die Herstellung der Goldpigmente erfolgt in zwei Schritten. Zunächst erfolgt die Belegung des Substrats mit TiO₂ und den organischen kolloidalen Partikeln. Nach der Pyrolysebehandlung findet im zweiten Schritt die Belegung mit Fe₂O₃ statt.

Zur Herstellung der erfindungsgemäßen Pigmente wird zunächst eine wäßrige Suspension des Substrats hergestellt. In diese Suspension kann gegebenenfalls eine Lösung mindestens eines Metallsalzes eingebracht werden. Danach erfolgt die gleichzeitige, aber separate Zugabe der Titansalzlösung und der organischen Kolloidlösung, wobei der pH-Wert des Reaktionsgemisches durch gleichzeitige Zugabe einer Säure oder Base in einem Bereich gehalten wird, der die Metallsalzhydrolyse bewirkt. Dabei wird das Metalloxidgemisch zusammen mit den Kolloidpartikeln auf die Substratoberfläche aufgefällt.

Nach dem Abtrennen, Waschen und Trocknen der auf diese Weise beschichteten Substrate werden die Pigmente bei > 700 °C, vorzugsweise 800-850 °C, unter Sauerstoffausschluß geglüht, wobei die Zersetzung der organischen Kolloidpartikel stattfindet. Die Glühtemperatur hängt in der Regel von der aufgefällten Schichtdicke ab; die Glühdauer kann von einigen Minuten bis zu mehreren Stunden, vorzugweise jedoch zwischen 20 und 120 Minuten, betragen.

Die mit TiO₂ beschichteten Substrate werden anschließend in Wasser suspendiert und mit Eisenhydroxid bzw. Eisenoxid durch Zugabe einer wäßrigen Eisen(III)salzlösung beschichtet. Das beschichtete Pigment wird abgetrennt, gewaschen, getrocknet und gegebenenfalls bei Temperaturen von 100 bis 300 °C, vorzugsweise 150-250 °C, geglüht.

Zur Fällung der Metallsalze kann jede Säure bzw. Base eingesetzt werden. Die optimalen Konzentrationen und pH-Werte können durch Routineversuche ermittelt werden. Üblicherweise wird der einmal zur Fällung eingestellte pH-Wert während der gesamten Fällung beibehalten um einheitliche Pigmente zu erzielen.

Zweckmäßigerweise wird man die technisch leicht zugänglichen Basen, wie z.B. NaOH, KOH oder Ammoniak, als Säuren verdünnte Mineralsäuren, wie z.B. HCI, H₂SO₄ oder HNO₃, verwenden. Da die Basen und Säuren nur der pH-Wertänderung dienen, ist ihre Natur unkritisch, so daß auch andere Säuren und Basen eingesetzt werden können.

Als Metallsalze, aus denen die Hydroxide gefällt werden können, sind alle wasserlöslichen Salze verwendbar, die durch Basen oder Säuren hydrolysierbar sind. Im allgemeinen ist die alkalische Hydrolyse bevorzugt.

Geeignete Metallsalze sind die Halogenide, Nitrate und Sulfate, insbesondere die Chloride, von Titan und Eisen.

Die einzelnen Verfahrensparameter zur Beschichtung bzw. zur Metallsalzhydrolyse sind herkömmlicher Art und ausführlich ,z.B. in der DE 25 57 796, beschrieben. Alle weiteren Parameter, wie z.B. Teilchengröße, Metallsalzkonzentrationen, Temperaturen und bevorzugte Ausführungsformen, können ebenfalls der DE 25 57 796 entnommen werden. Durch Variation der Dicke der dotierten Titandioxidschicht können bei beschichteten plättchenförmigen Substraten beliebige Interferenzfarben erster oder höherer Ordnung erreicht werden. Die Dicke der TiO₂- bzw. Fe₂O₃-Schicht ist an sich nicht kritisch, im allgemeinen beträgt sie etwa 1 bis 400 nm, vorzugsweise 5 bis 200 nm.

Vorzugsweise liegt die TiO₂-Schicht in der Rutilmodifikation vor. Dies kann nach Verfahren aus dem Stand der Technik erreicht werden, indem Fremdionen, insbesondere Zinn(IV) in die Schicht eingebaut werden. Diese Verfahren sind z.B. in der DE-PS 22 14 545 und 25 22 572 beschrieben.

Falls erwünscht können die erfindungsgemäßen Goldpigmente auch nachbeschichtet werden.

Wesentlicher Bestandteil des Belegungsmittels sind die organischen Kolloidpartikel. Alle bekannten organischen Kolloide mit Teilchenabmessungen < 10⁻⁵ cm können verwendet werden. Vorzugsweise werden gut wasserlösliche kolloidale organische Partikel, wie z.B. Polysaccharide, Stärke, Cellulose, Dextrin oder Gelatine sowie deren Derivate eingesetzt. Der Anteil an Kolloidpartikeln auf der Substratoberfläche beträgt 0,01 bis 20 Gew.%, vorzugsweise 0,1 bis 10 Gew.%, bezogen auf das Gesamtpigment.

Bei der Pyrolyse unter inerten Bedingungen zersetzt sich das Kolloid in der Metalloxidschicht, wobei ein äußerst feinteiliger Kohlenstoff mit Abmessungen < 5 nm erhalten wird. Der Kohlenstoff liegt gleichmäßig verteilt in der Titandioxidschicht vor. Zwischenräume zwischen den Metalloxiden werden aufgefüllt, so daß eine äußerst kompakte Kohlenstoff-Metalloxidschicht mit einem hohen Deckvermögen erhalten wird.

Der Kohlenstoffgehalt in der Titandioxidschicht ist steuerbar durch die Menge an kolloidalen Partikeln, die auf der Substratoberfläche zusammen mit dem Titandioxid aufgebracht werden.

Der Anteil an Kohlenstoff in den erfindungsgemäßen Pigmenten liegt im allgemeinen zwischen 0,01 und 10 Gew.%, vorzugsweise zwischen 0,1 und 5 Gew.%, und insbesondere zwischen 0,1 und 1 Gew.%, bezogen auf das Gesamtpigment.

Aufgrund der unterschiedlichen Substrate kann der gewichtsmäße Anteil an Kohlenstoff sehr stark variieren. Mit steigendem Kohlenstoffgehalt nimmt das Pigment einen immer graphitähnlicheren Glanz an.

Ein Ausbluten des Kohlenstoffs durch organische Lösungsmittel ist nicht zu beobachten. Weiterhin zeichnen sich die erfindungsgemäßen Pigmente durch einen gesteigerten Glanz als auch durch ihr hohes Deckvermögen aus. Die Pigmente sind ferner witterungsstabil und nicht leitfähig.

Die erfindungsgemäß hergestellten Goldpigmente sind abriebfest, sehr gut deckend, leicht dispergierbar, so daß sie für verschiedene Zwecke, insbesondere für Autolacke, für Druckfarben sowie in der Kosmetik eingesetzt werden können.

Gegenstand der Erfindung ist somit auch die Verwendung der Goldpigmente in Formulierungen wie Farben, Lacke, Pulverlacke, Druckfarben, Kunststoffe und Kosmetika.

Gegenstand der Erfindung sind weiterhin Formulierungen, die die erfindungsgemäßen Goldpigmente enthalten.

Die nachfolgenden Beispiele sollen die Erfindung näher verdeutlichen, ohne sie jedoch zu begrenzen:

### Beispiel 1

100 g Glimmer der Teilchengröße 10-60 µm werden in 2 l Wasser suspendiert und auf 75 °C erhitzt. Zu der Glimmersuspension wird eine Lösung bestehend aus 2,3 g SnCl₄ x 5 H₂O und 10 ml 37%iger HCI in 40 ml Wasser hinzudosiert. Nach beendeter Zugabe der SnCl₄-Lösung werden 220 ml TiCl₄-Lösung (400 g TiCl₄/l Wasser) und die Gelatine-Lösung (4 g in 220 ml Wasser gelöst) gleichzeitig aber separat zu der Pigmentsuspension zudosiert. Mit 32%iger NaOH-Lösung wird der pH-Wert auf 6,0 eingestellt. Anschließend läßt man 15 Minuten nachrühren. Zuletzt wird das fertige Pigment abfiltriert, salzfrei gewaschen, bei 110 °C getrocknet und 0,5 h bei 850 °C in einer Stickstoffatmosphäre geglüht.

100 g des so beschichteten Glimmerpigments werden in 21 Wasser suspendiert und auf 75 °C erhitzt. Während der Zudosierung von 650 ml FeCl₃-Lösung (5g FeCl₃/100 ml Wasser) wird der pH-Wert durch Zugabe einer 32%igen NaOH-Lösung auf pH=.4 konstant gehalten. Nach dem Ende der Belegung wird 15 Minuten bei 75 °C nachgerührt. Das Pigment wird abfiltriert, salzfrei gewaschen und 10 h bei 200 °C getrocknet. Man erhält ein Pigment mit goldfarbener Interferenzfarbe und einer grauen Körperfarbe.

### Beispiel 2

100 g Glimmer der Teilchengröße 10-60 µm werden in 2 l Wasser suspendiert und auf 75 °C erhitzt. Zu der Glimmersuspension wird eine Lösung bestehend aus 2,3 g SnCl₄ x 5 H₂O und 10 ml 37%iger HCI in 40 ml Wasser hinzudosiert. Nach beendeter Zugabe der SnCl₄-Lösung werden 320 ml TiCl₄-Lösung (400 g TiCl₄/l Wasser) und die Gelatine-Lösung (4 g in 320 ml Wasser gelöst) gleichzeitig aber separat zu der Pigmentsuspension zudosiert. Mit 32%iger NaOH-Lösung wird der pH-Wert auf 6,0 eingestellt. Anschließend läßt man 15 Minuten nachrühren. Zuletzt wird das fertige Pigment abfiltriert, salzfrei gewaschen, bei 110 °C getrocknet und 0,5 h bei 850 °C in einer Stickstoffatmosphäre geglüht.

100 g des so beschichteten Glimmerpigments werden in 2 l Wasser suspendiert und auf 75 °C erhitzt. Während der Zudosierung von 300 ml FeCl₃-Lösung (5g FeCl₃/100 ml Wasser) wird der pH-Wert durch Zugabe einer 32%igen NaOH-Lösung auf pH=.4 konstant gehalten. Nach dem Ende der Belegung wird 15 Minuten bei 75 °C nachgerührt. Das Pigment wird abfiltriert, salzfrei gewaschen und 10 h bei 200 °C getrocknet. Man erhält ein Pigment mit goldfarbener Interferenzfarbe und einer grauen Körperfarbe.

### Beispiel 3

100 g Glimmer der Teilchengröße 10-60 µm werden in 2 l Wasser suspendiert und auf 75 °C erhitzt. Zu der Glimmersuspension wird eine Lösung bestehend aus 2,3 g SnCl₄ x 5 H₂O und 10 ml 37%iger HCI in 40 ml Wasser hinzudosiert. Nach beendeter Zugabe der SnCl₄-Lösung werden 400 ml TiCl₄-Lösung (400 g TiCl₄/l Wasser) und die Gelatine-Lösung (4 g in 400 ml Wasser gelöst) gleichzeitig aber separat zu der Pigmentsuspension zudosiert. Mit 32%iger NaOH-Lösung wird der pH-Wert auf 6,0 eingestellt. Anschließend läßt man 15 Minuten nachrühren. Zuletzt wird das fertige Pigment abfiltriert, salzfrei gewaschen, bei 110 °C getrocknet und 0,5 h bei 850 °C in einer Stickstoffatmosphäre geglüht.

100 g des so beschichteten Glimmerpigments werden in 21 Wasser suspendiert und auf 75 °C erhitzt. Während der Zudosierung von 170 ml FeCl₃-Lösung (5g FeCl₃/100 ml Wasser) wird der pH-Wert durch Zugabe einer 32%igen NaOH-Lösung auf pH=.4 konstant gehalten. Nach dem Ende der Belegung wird 15 Minuten bei 75 °C nachgerührt. Das Pigment wird abfiltriert, salzfrei gewaschen und 10 h bei 200 °C getrocknet. Man erhält ein Pigment mit goldfarbener Interferenzfarbe und einer grauen Körperfarbe.

### Vergleichsbeispiel 1

100 g Glimmer der Teilchengröße 10-60 µm werden in 2 l Wasser suspendiert, auf 75 °C erhitzt und mit 1550 ml FeCl₃-Lösung (5 g Fe in 100 ml Wasser) versetzt. Der pH-Wert wird durch Zugabe von 32%iger NaOH-Lösung auf pH = 4 konstant gehalten. Nach beendeter Zugabe wird die Pigmentsuspension 15 min bei 75 °C nachgerührt. Das beschichtete Glimmerpigment wird abfiltriert, salzfrei gewaschen und 10 h bei 200 °C getrocknet.

Man erhält ein messinggoldfarbenes Interferenzpigment mit brauner Körperfarbe.

### Vergleichsbeispiel 2

100 g Glimmer der Teilchengröße 10-60 µm werden in 2 l Wasser suspendiert und auf 75 °C erhitzt. Zu der Suspension wird eine Lösung bestehend aus 2,3 g SnCl₄ x 5 H₂O und 10 ml 37%iger HCI in 40 ml H₂O hinzudosiert. Der pH-Wert wird während der Zugabe mit 32%iger NaOH-Lösung auf pH= 4 konstant gehalten. Nach beendeter Zugabe der SnCl₄-Lösung werden 500 ml TiCl₄-Lösung (400 g TiCl₄/l Wasser) und die Gelatine-Lösung (4 g in 500 ml Wasser gelöst) gleichzeitig aber separat zu der Pigment-suspension zudosiert. Mit 32%iger NaOH wird ein pH-Wert von 6,0 eingestellt und man läßt 15 min nachrühren. Zuletzt wird das Pigment abfiltriert, salzfrei gewaschen und in einer Stickstoffatmosphäre 0,5 h bei 850 °C geglüht.

Man erhält ein Pigment mit gelber Interferenzfarbe und einer grauen Körperfarbe.

## Patentansprüche

1. Goldpigmente auf Basis von mit Metalloxiden überzogenen Substraten, dadurch gekennzeichnet, daß das Pigment einen Mehrschichtenaufbau besitzt, wobei auf eine erste Schicht von Titandioxid, die mit Kohlenstoff, der durch thermische Zersetzung von organischen kolloidalen Partikeln erhalten wird, dotiert ist, eine Eisen(III)oxid-schicht folgt.

2. Goldpigmente nach Anspruch 1, dadurch gekennzeichnet, daß die Substrate plättchenförmig sind.

3. Goldpigmente nach Anspruch 2, dadurch gekennzeichnet, daß die plättchenförmigen Substrate Glimmerplättchen, Glas-, BaSO₄-, SiO₂-oder synthetische Keramikflakes oder mit ein oder mehreren Metalloxiden beschichtete Glimmerplättchen sind.

4. Goldpigmente nach einem der Ansprüche 1 bis 3, dadurch gekennzeichnet, daß die kolloidalen organischen Partikel Stärke, Cellulose, Gelatine, Dextrin oder deren Derivate sind.

5. Goldpigmente nach einem der Ansprüche 1 bis 4, dadurch gekennzeichnet, daß die TiO₂-Schicht in der Rutilmodifikation vorliegt.

6. Verfahren zur Herstellung der Goldpigmente nach Anspruch 1, dadurch gekennzeichnet, daß man eine wäßrige Substratsuspension herstellt, gegebenenfalls eine hydrolysierbare Metallsalzlösung und danach gleichzeitig aber separat eine Titansalzlösung und eine wäßrige organische Kolloidlösung zugibt, wobei der pH-Wert der Substratsuspension durch gleichzeitige Zugabe einer Base oder einer Säure in einem Bereich gehalten wird, der die Metallsalzhydrolyse bewirkt, das fertige Substrat abtrennt, wäscht, trocknet und bei Temperaturen von > 700 °C unter Sauerstoffausschluß glüht und nach dem Glühen auf das so beschichtete Substrat in wäßriger Lösung eine Eisenoxid-bzw. -hydroxidschicht auffällt, das fertige Pigment abtrennt, wäscht, trocknet und gegebenenfalls glüht.

7. Verwendung der Goldpigmente nach Anspruch 1 in Farben, Lacken, Pulverlacken, Druckfarben, Kunststoffen und kosmetischen Formulierungen.

8. Formulierungen enthaltend Goldpigmente nach Anspruch 1.

## Claims

1. Gold pigments based on substrates coated with metal oxides, characterized in that the pigment possesses a multilayer structure in which a first layer of titanium dioxide, which is doped with carbon obtained by thermal decomposition of organic colloidal particles, is followed by an iron(III) oxide layer.

2. Gold pigments according to Claim 1, characterized in that the substrates are plateletlike.

3. Gold pigments according to Claim 2, characterized in that the plateletlike substrates are mica platelets, flakes of glass, BaSO₄, SiO₂ or of synthetic ceramics, or mica platelets coated with one or more metal oxides.

4. Gold pigments according to one of Claims 1 to 3, characterized in that the colloidal organic particles are starch, cellulose, gelatine, dextrin or derivatives thereof.

5. Gold pigments according to one of Claims 1 to 4, characterized in that the TiO₂ layer is in the rutile modification.

6. Process for the preparation of the gold pigments according to Claim 1, characterized in that an aqueous substrate suspension is prepared, if desired a hydrolysable metal salt solution and, simultaneously but separately, a titanium salt solution and an aqueous organic colloid solution are added, the pH of the substrate suspension being maintained, by simultaneous addition of a base or of an acid, in a range which brings about hydrolysis of the metal salt, the finished substrate is separated off, washed, dried and calcined at temperatures of > 700°C in the absence of oxygen, after calcining an iron oxide layer or hydroxide layer is precipitated onto the substrate, coated in this way, in aqueous solution, and the finished pigment is separated off, washed, dried, and, if desired, calcined.

7. Use of the gold pigments according to Claim 1 in paints, varnishes, powder coatings, printing inks, plastics and cosmetic formulations.

8. Formulations comprising gold pigments according to Claim 1.

## Revendications

1. Pigments d'or à base de substrats revêtus d'oxydes métalliques, caractérisés en ce que le pigment possède une structure multicouche, une couche d'oxyde ferrique faisant suite à une première couche de dioxyde de titane qui est dopée avec du carbone qui est obtenu par décomposition thermique de particules organiques colloïdales.

2. Pigments d'or selon la revendication 1, caractérisés en ce que les substrats sont en paillettes.

3. Pigments d'or selon la revendication 2, caractérisés en ce que les substrats en paillettes sont des paillettes de mica, des paillettes de verre, BaSO₄, SiO₂ ou céramique synthétique, ou des paillettes de mica enrobées d'un ou plusieurs oxydes métalliques.

4. Pigments d'or selon l'une des revendications 1 à 3, caractérisés en ce que les particules organiques colloïdales sont des particules d'amidon, de cellulose, de gélatine, de dextrine ou de leurs dérivés.

5. Pigments d'or selon l'une des revendications 1 à 4, caractérisés en ce que la couche de TiO₂ se trouve sous forme de rutile.

6. Procédé pour la préparation des pigments d'or selon la revendication 1, caractérisé en ce que l'on prépare une suspension aqueuse de substrat, éventuellement une solution de sels métalliques hydrolysables et ensuite, simultanément mais séparément, une solution de sel de titane et une solution aqueuse de colloïde organique, en maintenant le pH de la suspension de substrat, par addition simultanée d'une base ou d'un acide, dans un intervalle qui provoque l'hydrolyse des sels métalliques, le substrat final est séparé, lavé, séché et calciné à des températures de > 700°C à l'abri de l'oxygène, et, après la calcination, on fait précipiter sur le substrat enrobé une couche d'oxyde ou d'hydroxyde de fer en solution aqueuse, et le pigment final est séparé, lavé, séché et éventuellement calciné.

7. Utilisation des pigments d'or selon la revendication 1, dans des couleurs, des peintures, des peintures en poudre, des encres d'imprimerie, des matières plastiques et des compositions cosmétiques.

8. Compositions contenant des pigments d'or selon la revendication 1.
